# EUROPEAN PATENT APPLICATION

(11) **EP 4 585 996 A1**
(43) Date of publication of application: **16.07.2025**
(21) Application number: 23863519.7
(22) Date of filing: 07.09.2023
(51) Int. Cl.: G02B 27/18, G02B 13/00, G02B 6/34, H04N 13/363

(54) **PROJECTION DEVICE AND ELECTRONIC DEVICE INCLUDING SAME**

(30) Priority: 07.09.2022 KR 20220113466; 06.12.2022 KR 20220168709
(71) Applicant: LG INNOTEK CO. LTD, Gangseo-gu Seoul 07796 (KR)
(72) Inventor: KIM, Ji Sung, Seoul 07796 (KR); SEO, Eun Seong, Seoul 07796 (KR); JI, Jung Goo, Seoul 07796 (KR)
(74) Representative: Plasseraud IP
(86) International application number: PCT/KR2023/013388
(87) International publication number: WO 2024/054055

(57) **Abstract**

An embodiment provides a projection device comprising: a light guide; a first light source disposed at a first side of the light guide; a lens group disposed at a fourth side of the light guide; and a first-side lens disposed between the first side of the light guide and the first light source, wherein: the lens group comprises first to Nth lenses; the first lens is located farthest from the fourth side of the light guide; the first side of the light guide overlaps the fourth side of the light guide in the optical-axis direction of the lens group; and the first-side lens and the Nth lens come into contact with the light guide.

## Description

### [Technical Field]

An embodiment relates to a projection device and an electronic device including the same.

### [Background Art]

Virtual reality (VR) technology refers to technology that makes a specific environment or situation, which is similar to reality but not real, created by artificial technology using a computer or the like.

Augmented reality (AR) technology refers to technology that synthesizes virtual objects or information into the real environment to make the objects appear as if they have been present in the original environment.

Mixed reality (MR) or hybrid reality technology refers to technology that creates a new environment or new information by combining the virtual world and the real world. In particular, MR refers to technology that causes interactions between what is present in the real world and what is present in the virtual world to be performed in real time.

In this case, the created virtual environment or situation stimulates the five senses of a user and allows the user to freely move between reality and imagination by providing spatial and temporal experiences similar to reality. Additionally, the user may not only simply immerse himself or herself in such an environment, but also interact with things implemented in such an environment by manipulating or giving a command using a real device.

Recently, research on apparatuses (gears and devices) used in such a technical field has been actively performed. However, there is a need for miniaturization and improved optical performance of such apparatuses.

### [Disclosure]

### [Technical Problem]

Embodiments provide a projection device and an electronic device in which a lens is bonded to a surface, through which light is emitted, of a light guide such that total reflection does not occur on an outer surface of the light guide (e.g., a prism) and thus stray light is removed when using the projection device and the electronic device including the same used for augmented reality (AR) and the like.

**In** addition, the embodiment provides a projection device and an electronic device with a reduced total track length (TTL).

The problem to be solved in the embodiment is not limited to this, and it can be said that objects or effects that can be understood from "Technical Solution" or "Modes of the Invention" which will be described below are also included.

### [Technical Solution]

A projection device according to an embodiment includes: a light guide; a first light source disposed on a first side of the light guide; a lens group disposed on a fourth side of the light guide; and a first side lens disposed between the first side of the light guide and the first light source, wherein the lens group includes a first lens to an N^{th} lens, the first lens is disposed farthest from the fourth side of the light guide, the first side of the light guide overlaps the fourth side of the light guide in an optical axis direction of the lens group, and the first side lens and the N^{th} lens are in contact with the light guide.

The N^{th} lens in the lens group may be disposed closest to the light guide.

The projection device may further include: a second light source disposed on a second side of the light guide; a third light source disposed on a third side of the light guide; a second side lens disposed between the second side of the light guide and the second light source; and a third side lens disposed between the third side of the light guide and the third light source.

A surface of the first side lens adjacent to the first light source may be convex, a surface of the second side lens adjacent to the second light source may be convex, a surface of the third side lens adjacent to the third light source may be convex, and the surfaces of the first side lens, the second side lens, and the third side lens, which are adjacent to each light source, may have the same radius of curvature.

A first optical axis for the first side and the fourth side of the light guide may be orthogonal to a second optical axis for the second side and the third side of the light guide.

A distance from the first lens to the first light source may be less than or equal to twice a focal length of the lens group, the light guide, and the first side lens.

A surface of the first lens facing the light guide may be convex in a direction opposite to a direction toward the light guide.

A size of the light guide may be greater than a size of the light source.

A size of the first side lens may be smaller than a size of the first side of the light guide.

A size or effective diameter of the light guide may be greater than a size or effective diameter of at least one lens among the first lens to the N^{th} lens of the lens group.

### [Advantageous Effects]

An embodiment implements a projection device and an electronic device in which a lens is bonded to a surface, through which light is emitted, of a light guide such that total reflection does not occur on an outer surface of the light guide (e.g., a prism) and thus stray light is removed when using the projection device and the electronic device including the same used for augmented reality (AR) and the like.

In addition, it is possible to implement a projection device and an electronic device with a reduced total track length (TTL).

In addition, it is possible to implement a projection device and an electronic device in which flare occurrence is minimized and a light source is easily miniaturized.

The various and beneficial advantages and effects of the present invention are not limited to the above-described contents and will be more easily understood in the course of describing specific embodiments of the present invention.

### [Description of Drawings]

FIG. 1 is a conceptual diagram illustrating an embodiment of an artificial intelligence (AI) device.
FIG. 2 is a block diagram showing a configuration of an extended reality electronic device according to an embodiment of the present invention.
FIG. 3 is a perspective view of an augmented reality electronic device according to a first embodiment of the present invention.
FIGS. 4 to 6 are conceptual diagrams for describing various display types applicable to a display unit according to an embodiment of the present invention.
FIG. 7 is a perspective view of a projection device according to one embodiment.
FIG. 8 is an exploded perspective view of the projection device according to one embodiment.
FIG. 9 is a view describing the coupling of an outer lens, a first spacer, a light guide, a lens, and a second spacer with a barrel in the projection device according to one embodiment.
FIG. 10 is a view describing the coupling between a barrel, a housing, and an additional housing in the projection device according to one embodiment.
FIG. 11 is a view describing the coupling between a housing and a light source unit in the projection device according to one embodiment.
FIG. 12 is a view of an optical system of the projection device according to the first embodiment.
FIG. 13 is a perspective view of the light guide, a fourth lens, and a side lens in the projection device according to the embodiment.
FIG. 14 is another perspective view of the light guide, the fourth lens, and the side lens in the projection device according to the embodiment.
FIG. 15 is a view of an optical system of a projection device according to a second embodiment.

### [Modes of the Invention]

Hereinafter, exemplary embodiments of the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be interpreted as meanings that are generally understood by those skilled in the art to which the present invention pertains unless explicitly specifically defined and described, and the meanings of the commonly used terms, such as terms defined in a dictionary, may be interpreted in consideration of their contextual meanings in the related art.

In addition, the terms used in the embodiments of the present invention are for describing the embodiments and are not intended to limit the present invention.

In the specification, a singular form may include a plural form unless the context clearly dictates otherwise, and when described as "at least one (or one or more) of A, B, and C," it may include one or more of all possible combinations of A, B, and C.

In addition, terms such as first, second, A, B, (a), and (b) may be used to describe components of the embodiments of the present invention.

These terms are only for the purpose of distinguishing one component from another component, and the nature, sequence, order, etc. of the corresponding components are not limited by these terms.

In addition, when a first component is described as being "connected," "coupled," or "joined" to a second component, it may include not only a case in which the first component is directly connected, coupled, or joined to the second component, but also a case in which the first component is "connected," "coupled," or "joined" to the second component with another component present between the first component and the second component.

In addition, when a first component is described as being formed or disposed "on (above) or below (under)" a second component, "on (above)" or "below (under)" may include not only a case in which two components are in direct contact with each other, but also a case in which one or more third components are formed or disposed between the two components. In addition, when expressed as "on (above) or below (under)," it may include the meaning of not only an upward direction but also a downward direction based on one component.

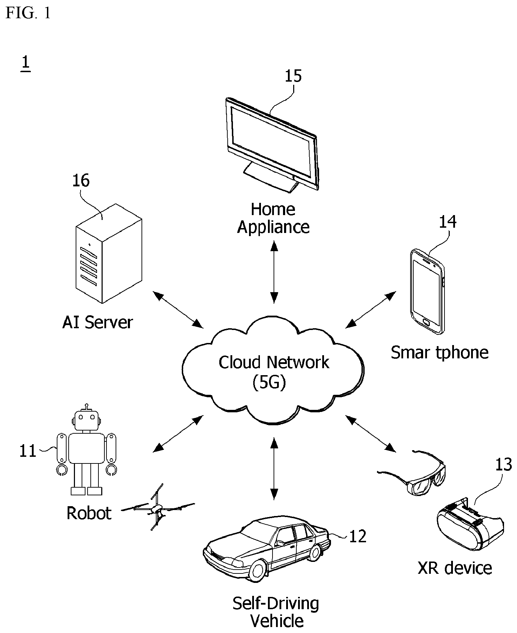

FIG. 1 is a conceptual diagram illustrating an embodiment of an artificial intelligence (AI) device.

Referring to FIG. 1, at least one of an AI server 16, a robot 11, an autonomous vehicle 12, an extended reality (XR) device 13, a smart phone 14, and a home appliance 15 included in an AI system is connected to a cloud network 10. Here, the robot 11, the autonomous vehicle 12, the XR device 13, the smart phone 14, the home appliance 15, etc., to which AI technology is applied, may be referred to as AI devices 11 to 15.

The cloud network 10 may be a network that constitutes a part of a cloud computing infrastructure or is present in the cloud computing infrastructure. Here, the cloud network 10 may be formed using a 3G network, a 4G or long term evolution (LTE) network, or a 5G network.

That is, the devices 11 to 16 constituting the AI system may be connected to each other through the cloud network 10. In particular, the devices 11 to 16 may communicate with each other through a base station or may communicate with each other directly without using a base station.

The AI server 16 may include a server that performs AI processing and a server that performs operations on big data.

The AI server 16 is connected to at least one of the AI devices constituting the AI system, such as the robot 11, the autonomous vehicle 12, the XR device 13, the smart phone 14, and the home appliance 15, through the cloud network 10, and may assist at least part of the AI processing of the connected AI devices 11 to 15.

In this case, the AI server 16 may train an artificial neural network according to a machine learning algorithm on behalf of the AI devices 11 to 15 and store a learning model therein or transmit the learning model to the AI devices 11 to 15.

In this case, the AI server 16 may receive input data from the AI devices 11 to 15, infer a result value for the received input data using the learning model, generate a response or control command based on the inferred result value, and transmit the response or control command to the AI devices 11 to 15.

Alternatively, the AI device 11 to 15 may infer a result value for input data using the learning model directly and generate a response or control command based on the inferred result value.

### <AI + Robot>

The robot 11 may be implemented as a guide robot, a transport robot, a cleaning robot, a wearable robot, an entertainment robot, a pet robot, an unmanned flying robot, etc., to which AI technology is applied.

The robot 11 may include a robot control module for controlling an action, and the robot control module may be a software module or a chip that is hardware in which the software module is implemented.

The robot 11 may acquire state information of the robot 11, detect (recognize) a surrounding environment and nearby objects, generate map data, determine a movement path and a driving plan, determine a response to a user interaction, or determine an action using sensor information acquired from various types of sensors.

Here, the robot 11 may use sensor information acquired from at least one sensor among a lidar, a radar, and a camera to determine the movement path and driving plan.

The robot 11 may perform the above-described operations using a learning model constituted by at least one artificial neural network. For example, the robot 11 may recognize the surrounding environment and nearby objects using the learning model and determine an action using the recognized surrounding environment information or nearby object information. Here, the learning model may be trained directly in the robot 11 or trained in an external device such as the AI server 16.

In this case, the robot 11 may perform an action upon generating a result using the learning model directly or transmit the sensor information to the external device such as the AI server 16 and perform an action upon receiving a result generated accordingly.

The robot 11 may determine the movement path and driving plan using at least one of the map data, the object information detected from the sensor information, and the object information acquired from the external device, and may control a driving unit to drive the robot 11 according to the determined movement path and driving plan.

The map data may include object identification information on various objects disposed in a space where the robot 11 moves. For example, the map data may include object identification information on fixed objects such as a wall and a door, as well as rearrangeable objects such as a flower pot and a desk. Additionally, the object identification information may include a name, a type, a distance, a position, etc.

Additionally, the robot 11 may perform an action or travel by controlling the driving unit based on control of the user or interactions with the user. In this case, the robot 11 may acquire interaction intention information according to an action or voice utterance of the user and perform an action upon determining a response based on the acquired intention information.

### <AI + Autonomous driving>

The autonomous vehicle 12 may be implemented as a mobile robot, a vehicle, an unmanned aerial vehicle, etc., to which AI technology is applied.

The autonomous vehicle 12 may include an autonomous driving control module for controlling an autonomous driving function, and the autonomous driving control module may be a software module or a chip that is hardware in which the software module is implemented. The autonomous driving control module may be included in the autonomous vehicle 12 as a component thereof or formed as separate hardware and connected to the outside of the autonomous vehicle 12.

The autonomous vehicle 12 may acquire state information of the autonomous vehicle 12, detect (recognize) a surrounding environment and nearby objects, generate map data, determine a movement path and a driving plan, or determine an action using sensor information acquired from various types of sensors.

Here, the autonomous vehicle 12 may use sensor information acquired from at least one sensor among a lidar, a radar, and a camera to determine the movement path and driving plan, like the robot 11.

In particular, the autonomous vehicle 12 may recognize the environment or objects in an area where the field of vision is obscured or an area beyond a certain distance by receiving sensor information from external devices or receiving information recognized by external devices directly from the external devices.

The autonomous vehicle 12 may perform the above-described operations using a learning model constituted by at least one artificial neural network. For example, the autonomous vehicle 12 may recognize the surrounding environment and nearby objects using the learning model and determine a driving route using the recognized surrounding environment information or nearby object information. Here, the learning model may be trained directly in the autonomous vehicle 12 or trained in an external device such as the AI server 16.

In this case, the autonomous vehicle 12 may perform an action upon generating a result using the learning model directly or transmit the sensor information to the external device such as the AI server 16 and perform an action upon receiving a result generated accordingly.

The autonomous vehicle 12 may determine the movement path and driving plan using at least one of the map data, the object information detected from the sensor information, and the object information acquired from the external device, and may control a driving unit to drive the autonomous vehicle 12 according to the determined movement path and driving plan.

The map data may include object identification information on various objects disposed in a space (e.g., a road) where the autonomous vehicle 12 is traveling. For example, the map data may include object identification information on fixed objects such as a street light, a rock, and a building, as well as movable objects such as a vehicle and a pedestrian. Additionally, the object identification information may include a name, a type, a distance, a position, etc.

Additionally, the autonomous vehicle 12 may perform an action or travel by controlling the driving unit based on control of the user or interactions with the user. In this case, the autonomous vehicle 12 may acquire interaction intention information according to an action or voice utterance of the user and perform an action upon determining a response based on the acquired intention information.

### <AI + XR>

The XR device 13 may be implemented as a head-mount display (HMD), a head-up display (HUD) provided in a vehicle, a television, a mobile phone, a smart phone, a computer, a wearable device, a home appliance, a digital signage, a vehicle, a fixed robot, a mobile robot, etc., to which AI technology is applied.

The XR device 13 may acquire information on a surrounding space or a real object by analyzing 3D point cloud data or image data acquired through various sensors or from an external device to generate position data and attribute data for 3D points and may render an XR object to be output. For example, the XR device 13 may output the XR object containing additional information on the recognized object to correspond to the recognized object.

The XR device 13 may perform the above-described operations using a learning model constituted by at least one artificial neural network. For example, the XR device 13 may recognize the real object from the 3D point cloud data or image data using the learning model and provide information corresponding to the recognized real object. Here, the learning model may be trained directly in the XR device 13 or trained in an external device such as the AI server 16.

In this case, the XR device 13 may perform an action upon generating a result using the learning model directly or transmit sensor information to the external device such as the AI server 16 and perform an action upon receiving a result generated accordingly.

### <AI + Robot + Autonomous driving>

The robot 11 may be implemented as a guide robot, a transport robot, a cleaning robot, a wearable robot, an entertainment robot, a pet robot, an unmanned flying robot, etc., to which AI technology and autonomous driving technology are applied.

The robot 11 to which AI technology and autonomous driving technology are applied may be a robot itself with an autonomous driving function, or the robot 11 that interacts with the autonomous vehicle 12.

The robot 11 with the autonomous driving function may be a general term for devices that move on their own along a given path without control of the user or move by determining a path on their own.

The robot 11 and the autonomous vehicle 12 with the autonomous driving function may use a common sensing method to determine one or more of a movement path and a driving plan. For example, a robot 11 and the autonomous vehicle 12 with the autonomous driving function may determine one or more of the movement path and the driving plan using information sensed through a lidar, radar, or camera.

The robot 11 interacting with the autonomous vehicle 12 may be present separately from the autonomous vehicle 12 and may be linked to the autonomous driving function inside or outside the autonomous vehicle 12 or perform actions linked to the user riding in the autonomous vehicle 12.

In this case, the robot 11 interacting with the autonomous vehicle 12 may control or assist the autonomous driving function of the autonomous vehicle 12 by acquiring sensor information on behalf of the autonomous vehicle 12 and providing the sensor information to the autonomous vehicle 12, or by acquiring sensor information, generating surrounding environment information or nearby object information, and providing the surrounding environment information or nearby object information to the autonomous vehicle 12.

Alternatively, the robot 11 interacting with the autonomous vehicle 12 may monitor the user riding in the autonomous vehicle 12 or control functions of the autonomous vehicle 12 through interactions with the user. For example, when it is determined that the driver is drowsy, the robot 11 may activate the autonomous driving function of the autonomous vehicle 12 or assist in controlling the driving unit of the autonomous vehicle 12. Here, the function of the autonomous vehicle 12 controlled by the robot 11 may include a function provided by a navigation system or audio system installed in the autonomous vehicle 12 as well as the autonomous driving function.

Alternatively, the robot 11 interacting with the autonomous vehicle 12 may provide information to the autonomous vehicle 12 or assist functions from the outside of the autonomous vehicle 12. For example, the robot 11 may provide traffic information including signal information or the like to the autonomous vehicle 12 like a smart traffic light or may interact with the autonomous vehicle 12 to automatically connect an electric charger to a charging port like an automatic electric charger for an electric vehicle.

### <AI + Robot + XR>

The robot 11 may be implemented as a guide robot, a transport robot, a cleaning robot, a wearable robot, an entertainment robot, a pet robot, an unmanned flying robot, a drone, etc., to which AI technology and XR technology are applied.

The robot 11 to which XR technology is applied may be a robot that is a target of control or interactions in an XR image. In this case, the robot 11 is distinct from the XR device 13 and may be linked with the XR device 13.

When the robot 11 that is the target of control or interactions in an XR image acquires sensor information from sensors including a camera, the robot 11 or XR device 13 may generate an XR image based on the sensor information, and the XR device 13 may output the generated XR image. Additionally, the robot 11 may operate based on a control signal input through the XR device 13 or interactions with the user.

For example, the user may check an XR image corresponding to the viewpoint of a remotely linked robot 11 through an external device such as the XR device 13 and may adjust an autonomous driving path of the robot 11, control the operation or driving of the robot 11, or check information on surrounding objects of the robot 11 through interactions.

### <AI + Autonomous Driving + XR>

The autonomous vehicle 12 may be implemented as a mobile robot, a vehicle, an unmanned aerial vehicle, etc., to which AI technology and XR technology are applied.

The autonomous vehicle 12 to which XR technology is applied may be an autonomous vehicle equipped with a device for providing an XR image, an autonomous vehicle that is a target of control or interactions in an XR image, etc. In particular, the autonomous vehicle 12 that is a target of control or interactions in an XR image is distinct from the XR device 13 and may be linked with the XR device 13.

The autonomous vehicle 12 equipped with a device for providing an XR image may acquire sensor information from sensors including a camera and output an XR image generated based on the acquired sensor information. For example, the autonomous vehicle 12 may be equipped with a HUD to output the XR image, thereby providing an occupant with an XR object corresponding to a real object or an object on a screen.

In this case, when the XR object is output to the HUD, at least a portion of the XR object may be output so as to overlap the real object toward which the occupant's gaze is directed. On the other hand, when the XR object is output to a display installed in the autonomous vehicle 12, at least a portion of the XR object may be output so as to overlap the object on the screen. For example, the autonomous vehicle 12 may output XR objects corresponding to objects such as a lane, another vehicle, a traffic light, a traffic sign, a two-wheeled vehicle, a pedestrian, a building, etc.

When the autonomous vehicle 12 that is the target of control or interactions in an XR image acquires sensor information from sensors including a camera, the autonomous vehicle 12 or XR device 13 may generate an XR image based on the sensor information, and the XR device 13 may output the generated XR image. Additionally, the autonomous vehicle 12 may operate based on a control signal input through the external device such as the XR device 13 or interactions with the user.

### [XR technology]

XR is a general term for virtual reality (VR), augmented reality (AR), and mixed reality (MR). VR technology is computer graphics (CG) technology that provides the object or background of the real world as only a CG image, AR technology is CG technology that provides a virtual CG image on an image of the real object, and MR technology is CG technology that mixes and combines a virtual object with the real world.

The MR technology is similar to the AR technology in that it shows real and virtual objects together. However, there is a difference in that while the AR technology uses the virtual object to complement the real object, the MR technology uses the virtual and real objects with equal characteristics.

XR technology may be applied to an HMD, an HUD, a mobile phone, a tablet PC, a laptop PC, a desktop PC, TV, a digital signage, etc., and a device to which the XR technology is applied may be called an XR device.

Hereinafter, an electronic device providing XR according to an embodiment of the present invention will be described. In particular, a projection device which is applied to the AR and an electronic device including the same will be described in detail.

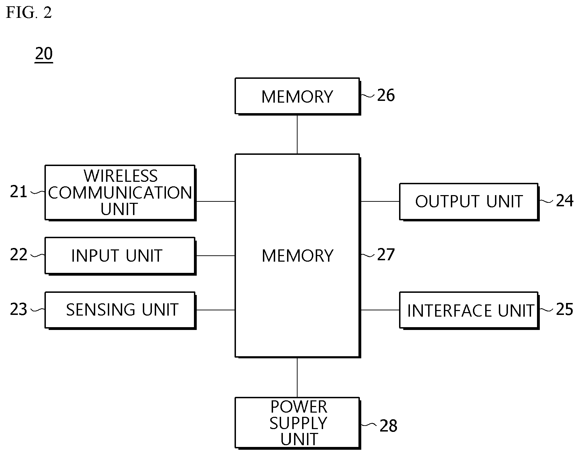

FIG. 2 is a block diagram showing a configuration of an XR electronic device 20 according to an embodiment of the present invention.

Referring to FIG. 2, the XR electronic device 20 may include a wireless communication unit 21, an input unit 22, a sensing unit 23, an output unit 24, an interface unit 25, a memory 26, a control unit 27, and a power supply unit 28. The components illustrated in FIG. 2 are not essential for implementing the electronic device 20, and thus the electronic device 20 described in this specification may have more or fewer components than the components listed above.

More specifically, among the above components, the wireless communication unit 21 may include one or more modules that enable wireless communication between the electronic device 20 and a wireless communication system, between the electronic device 20 and another electronic device, or between the electronic device 20 and an external server. Additionally, the wireless communication unit 21 may include one or more modules that connect the electronic device 20 to one or more networks.

This wireless communication unit 21 may include at least one of a broadcast reception module, a mobile communication module, a wireless Internet module, a short-range communication module, and a position information module.

The input unit 22 may include a camera or an image input unit for inputting an image signal, a microphone or an audio input unit for inputting an audio signal, and a user input unit (e.g., a touch key, a mechanical key, etc.) for receiving information from a user. Voice data or image data collected from the input unit 22 may be analyzed and processed with a control command of the user.

The sensing unit 23 may include one or more sensors for sensing at least one of information in the electronic device 20, information on an environment surrounding the electronic device 20, and user information.

For example, the sensing unit 23 may include at least one of a proximity sensor, an illumination sensor, a touch sensor, an acceleration sensor, a magnetic sensor, a G-sensor, a gyroscope sensor, a motion sensor, an RGB sensor, an infrared sensor (an IR sensor), a finger scan sensor, an ultrasonic sensor, an optical sensor (e.g., a photographing means), a microphone, a battery gauge, an environmental sensor (e.g., a barometer, a hygrometer, a thermometer, a radiation detection sensor, a heat detection sensor, a gas detection sensor, etc.), and a chemical sensor (e.g., an electronic nose, a healthcare sensor, a biometric recognition sensor, etc.). Meanwhile, the electronic device 20 disclosed in the present specification may utilize types of information sensed by at least two of these sensors in combination.

The output unit 24 is for generating output related to vision, hearing, or tactile sensation, and may include at least one of a display unit, an audio output unit, a haptic module, and an optical output unit. The display unit may implement a touch screen by forming a mutual layer structure of the display unit and the touch sensor or integrally forming the display unit and the touch sensor. Such a touch screen may function as a user input device that provides an input interface between the AR electronic device 20 and the user and may also provide an output interface between the AR electronic device 20 and the user.

The interface unit 25 serves as a passage for various types of external devices connected to the electronic device 20. Through the interface unit 25, the electronic device 20 may receive VR or AR content from the external device and exchange various input signals, sensing signals, and types of data to perform mutual interactions.

For example, the interface unit 25 may include at least one of a wired or wireless headset port, an external charger port, a wired or wireless data port, a memory card port, a port for connecting a device equipped with an identification module, an audio I/O (input/output) port, a video I/O (input/output) port, and an earphone port.

Additionally, the memory 26 stores data that supports various functions of the electronic device 20. The memory 26 may store a plurality of application programs (or applications) driven by the electronic device 20, data for the operation of the electronic device 20, and commands. At least some of these applications may be downloaded from an external server via wireless communication. Additionally, at least some of these applications may be present in the electronic device 20 from the time of shipment for basic functions of the electronic device 20 (e.g., call receiving and outgoing functions, and message receiving and outgoing functions).

The control unit 27 typically controls the overall operation of the electronic device 20 in addition to operations related to the application program. The control unit 27 may process a signal, data, information, etc. input or output through the components described above.

In addition, the control unit 27 may control at least some of the components by running the application program stored in the memory 26 to provide appropriate information to the user or process a function. Furthermore, the control unit 27 may operate at least two of the components included in the electronic device 20 in combination to run the application program.

In addition, the control unit 27 may detect the movement of the electronic device 20 or the user using a gyroscope sensor, a gravity sensor, a motion sensor, etc., included in the sensing unit 23. Alternatively, the control unit 27 may detect an object approaching the electronic device 20 or the user using a proximity sensor, an illuminance sensor, a magnetic sensor, an infrared sensor, an ultrasonic sensor, a light sensor, etc., included in the sensing unit 23. In addition, the control unit 27 may detect the user's movement through sensors provided in a controller that operates in conjunction with the electronic device 20.

Additionally, the control unit 27 may perform operations (or functions) of the electronic device 20 using an application program stored in the memory 26.

The power supply unit 28 receives external power or internal power under the control of the control unit 27 and supplies power to each component included in the electronic device 20. The power supply unit 28 includes a battery, and the battery may be provided in a built-in or replaceable form.

At least some of the above components may cooperate with each other to implement the operation, control, or control method of the electronic device according to various embodiments which will be described below. Additionally, the operation, control, or control method of the electronic device may be implemented on the electronic device by running at least one application program stored in the memory 26.

Hereinafter, an electronic device described as an example of the present invention will be described based on an embodiment applied to an HMD. However, embodiments of the electronic device according to the present invention may include a mobile phone, a smart phone, a laptop computer, a digital broadcasting terminal, a personal digital assistant (PDA), a portable multimedia player (PMP), a navigation device, a slate PC, a tablet PC, an ultrabook, a wearable device, etc. The wearable device may include a smart watch, a contact lens, VR/AR/MR glasses, etc. in addition to the HMD.

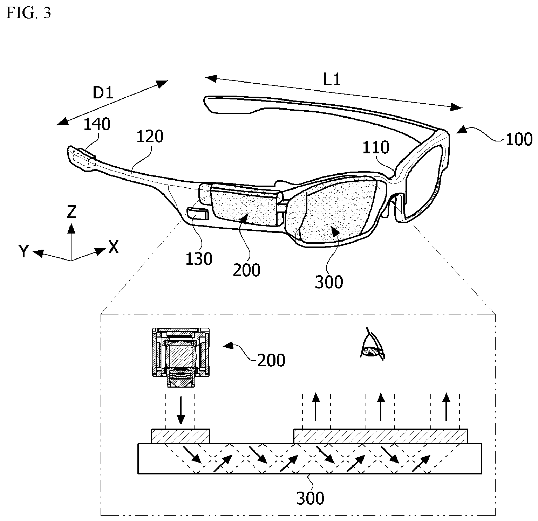

FIG. 3 is a perspective view of an AR electronic device according to an embodiment of the present invention.

As illustrated in FIG. 3, the electronic device according to the embodiment of the present invention may include a frame 100, a projection device 200, and a display unit 300.

The electronic device may be provided as a glasses type (smart glasses). The glasses-type electronic device is worn on the head of the human body and may be provided with the frame (a case, a housing, etc.) 100 for this purpose. The frame 100 may be made of a flexible material for easy wearing.

The frame 100 is supported on the head and provides a space for mounting various parts. As illustrated, electronic components, such as the projection device 200, a user input unit 130, an audio output unit 140, etc., may be mounted on the frame 100. Additionally, a lens covering at least one of the left and right eyes may be detachably mounted on the frame 100.

The frame 100 may have the form of glasses worn on the face of the user as shown in the drawing, but the present invention is not necessarily limited thereto, and the frame 100 may have a form such as goggles worn in close contact with the user's face.

The frame 100 may include a front frame 110 having at least one opening and a pair of side frames 120 that extend in a y direction (in FIG. 3) intersecting the front frame 110 to be parallel to each other.

In the frame 100, a length DI in an x direction and a length LI in the y direction may be the same or different.

The projection device 200 is provided to control various electronic components provided in the electronic device. The projection device 200 may be used interchangeably with a "light output device," a "light projection device," a "light radiation device," an "optical device," etc.

The projection device 200 may generate an image or a video that is a series of images, which is shown to the user. The projection device 200 may include an image source panel that generates an image and a plurality of lenses that diffuse and converge light generated from the image source panel.

The projection device 200 may be fixed to either of the two side frames 120. For example, the projection device 200 may be fixed to the inside or outside of one of the side frames 120 or may be integrally formed to be embedded in one of the side frames 120. Alternatively, the projection device 200 may be fixed to the front frame 110 or provided separately from the electronic device.

The display unit 300 may be implemented in the form of an HMD. The HMD form refers to a display type in which the display unit is mounted on the head to show an image directly in front of the user's eyes. When the user wears the electronic device, the display unit 300 may be disposed to correspond to at least one of the left and right eyes so as to provide an image directly in front of the user's eyes. In this drawing, the display unit 300 is positioned in a portion corresponding to the right eye so as to output the image toward the user's right eye. However, as described above, the present invention is not limited thereto, and the display unit may be disposed on both the left and right eyes.

The display unit 300 may allow the user to see an image generated by the projection device 200 while the user visually perceives an external environment. For example, the display unit 300 may project an image onto a display area using a prism.

The display unit 300 may be formed to be transparent so that the projected image and a general field of view in front (a range that the user sees through his/her eyes) are seen simultaneously. For example, the display unit 300 may be translucent, and may be made of an optical element containing glass.

The display unit 300 may be inserted into and fixed in the opening included in the front frame 110 or may be located on the back of the opening (i.e., between the opening and the user) and fixed to the front frame 110. The drawing illustrates an example in which the display unit 300 is located on the back of the opening and fixed to the front frame 110, but the display unit 300 may be disposed and fixed at various positions on the frame 100.

As illustrated in FIG. 3, in the electronic device, the projection device 200 projects image light to one side of the display unit 300, the image light is emitted to the other side through the display unit 300, allowing the user to see the image generated by the projection device 200.

Accordingly, the user may see the image generated by the projection device 200 while the user views the external environment through the opening of the frame 100. That is, the image output through the display unit 300 may appear to overlap the general field of view. The electronic device may take advantage of these display characteristics to provide AR in which a virtual image is superimposed on a real-world image or background to create a single image.

Furthermore, in addition to this running, the external environment and the image generated in the projection device 200 may be provided to the user with a time difference for a short period of time that is not recognized by a person. For example, in one section in a frame, the external environment may be provided to the person, and in another section, the image from the projection device 200 may be provided to the person.

Alternatively, both the overlap and time difference may be provided.

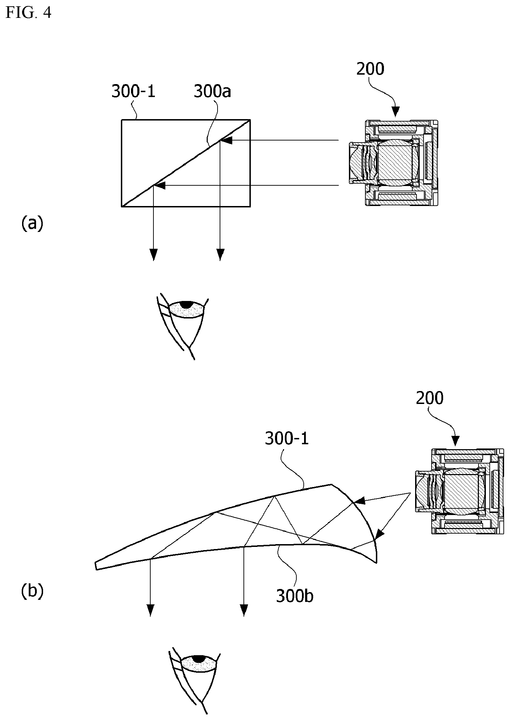

FIGS. 4 to 6 are conceptual diagrams for describing various display types applicable to a display unit according to an embodiment of the present invention.

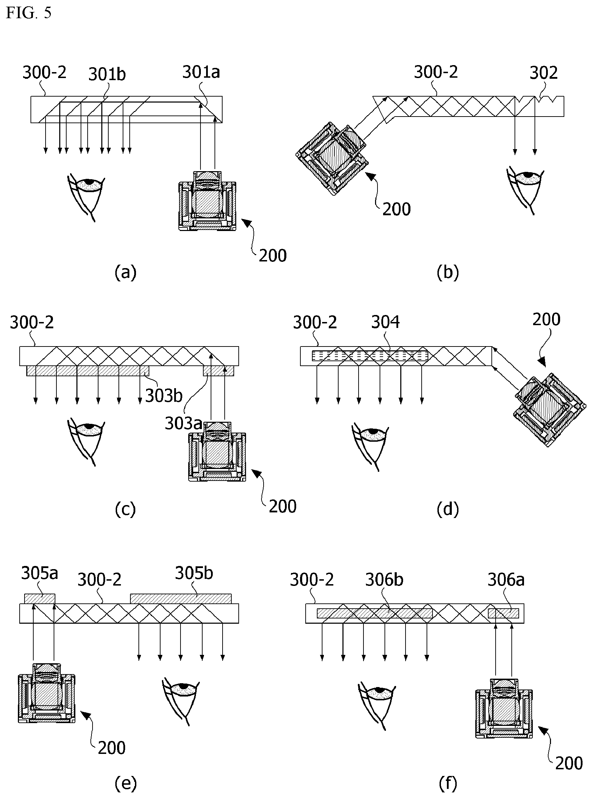

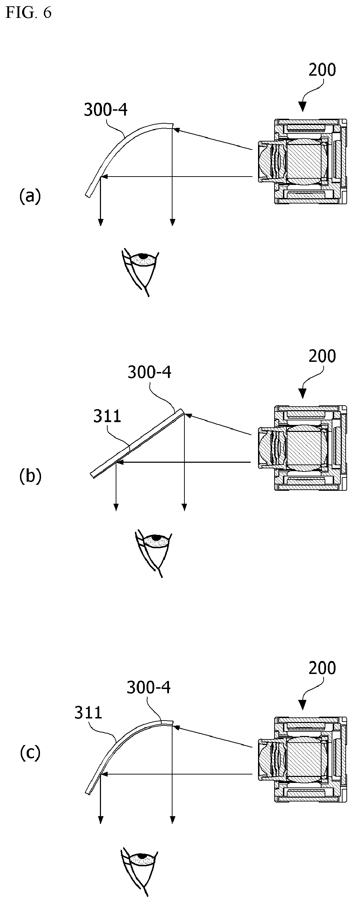

Specifically, FIG. 4 is a view for describing an embodiment of a prism type optical element, FIG. 5 is a view for describing an embodiment of a waveguide type optical element, and FIG. 6 is a view for describing an embodiment of a surface reflection type optical element.

As illustrated in FIG. 4, a display unit 300-1 according to an embodiment of the present invention may use a prism type optical element.

As an example, as illustrated in FIG. 4A, a flat type glass optical element in which a surface 300a on which image light is incident and from which image light is emitted is flat may be used as the prism type optical element, or as illustrated in FIG. 4B, a freeform glass optical element in which a surface 300b from which image light is emitted is formed as a curved surface without a constant radius of curvature may be used as the prism type optical element.

The flat type glass optical element may receive image light generated in the projection device 200 through a flat side surface, reflect the image light by a total reflection mirror 300a provided therein, and emit the image light toward the user. Here, the total reflection mirror 300a provided inside the flat type glass optical element may be formed inside the flat type glass optical element by a laser.

The freeform glass optical element is formed such that a thickness decreases in a direction away from an incident surface, and thus the image light generated in the projection device 200 may be incident on a curved side surface, totally reflected internally, and emitted toward the user.

As illustrated in FIG. 5, a display unit 300-2 according to another embodiment of the present invention may use a waveguide type optical element or a light guide optical element (LOE).

Examples of the waveguide or light guide type optical element include a segmented beam splitter type glass optical element as illustrated in FIG. 5A, a sawtooth prism type glass optical element as illustrated in FIG. 5B, a glass optical element having a diffractive optical element (DOE) as illustrated in FIG. 5C, a glass optical element having a hologram optical element (HOE) as illustrated in FIG. 5D, a glass optical element having a passive grating as illustrated in FIG. 5E, and a glass optical element having an active grating as illustrated in FIG. 5F.

As illustrated in FIG. 5A, the segmented beam splitter type glass optical element may be provided with a total reflection mirror 301a on a side on which the image light is incident and a partial reflection mirror (a segmented beam splitter) 301b on a side from which the image light is emitted.

Accordingly, the image light generated in the projection device 200 may be totally reflected by the total reflection mirror 301a inside the glass optical element, and the totally reflected image light may be partially separated and emitted by the partial reflection mirror 301b while being guided in a longitudinal direction of the glass and recognized by the user's eyes.

As illustrated in Fig. 5B, in the glass optical element in a sawtooth prism type, the image light of the projection device 200 may be incident diagonally on a side surface of the glass, totally reflected inside the glass, emitted outside the glass by a sawtooth-shaped unevenness 302 provided on a side from which the image light is emitted, and recognized by the user's eyes.

As illustrated in FIG. 5C, the glass optical element having a DOE may be provided with a first diffractive element 303a on a surface on which the image light is incident and a second diffractive element 303b on a surface through which the image light is emitted. The first and second diffraction elements 303a and 303b may be provided in a form in which a specific pattern is formed on the surface of the glass or a separate diffraction film is attached thereon.

Accordingly, the image light generated in the projection device 200 may be diffracted through the first diffraction element 303a upon entering the glass, totally reflected, guided in a longitudinal direction of the glass, emitted through the second diffraction element 303b, and recognized by the user's eyes.

As illustrated in FIG. 5D, the glass optical element having an HOE may be provided with an out-coupler 304 inside the glass on a side through which the image light is emitted. Accordingly, the image light may be diagonally incident on the side surface of the glass from the projection device 200, totally reflected, guided in a longitudinal direction of the glass, emitted by the out-coupler 304, and recognized by the user's eyes. The HOE may be further classified into a structure with a passive grating and a structure with an active grating, with the structure slightly changed.

As illustrated in FIG. 5E, the glass optical element having a passive grating may be provided with an in-coupler 305a on a surface opposite to a glass surface on which the image light is incident, and an out-coupler 305b on a surface opposite to a glass surface through which the image light is emitted. Here, the in-coupler 305a and the out-coupler 305b may be provided in the form of a film having a passive grating.

Accordingly, the image light that is incident on the incident side surface of the glass may be totally reflected by the in-coupler 305a provided on the opposite surface, guided in the longitudinal direction of the glass, emitted through the opposite surface of the glass by the out-coupler 305b, and recognized by the user's eyes.

As illustrated in FIG. 5F, the glass optical element having an active grating may be provided with an in-coupler 306a formed as an active grating inside the glass on a side on which the image light is incident, and an out-coupler 306b formed as an active grating inside the glass on a side through which the image light is emitted.

Accordingly, the image light that is incident in the glass may be totally reflected by the in-coupler 306a, guided along the longitudinal direction of the glass, emitted outside the glass by the out-coupler 306b, recognized by the user's eyes.

According to a modified example, a pin mirror type optical element may be used as a display unit.

In addition, as illustrated in FIG. 6A, a surface reflection type optical element, which is a freeform combiner type, may use freeform combiner glass formed such that a plurality of flat surfaces having different incident angles of the image light are formed in a single piece of glass to have an overall curved surface to perform the role of a combiner. Such freeform combiner glass 300 may receive the image light at different incident angles for each area and emit the image light to the user.

As illustrated in FIG. 6B, a surface reflection type optical element, which is a flat HOE type, may be provided with an HOE 311 which is applied or patterned on the surface of a flat piece of glass, and the image light entering from the projection device 200 may pass through the HOE 311, may be reflected from the surface of the glass, and then pass through the HOE 311 again to be emitted toward the user.

As illustrated in FIG. 6C, a surface reflection type optical element, which is a freeform HOE type, may be provided with an HOE 313 which is applied or patterned on the surface of a piece of freeform glass, and the operating principle may be the same as that described in FIG. 6B.

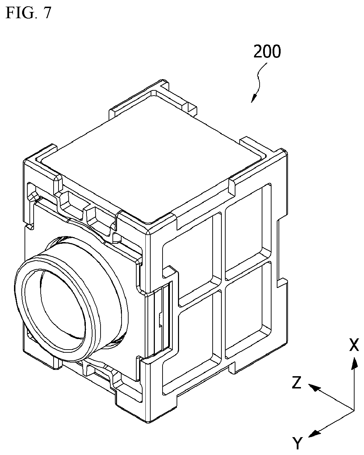

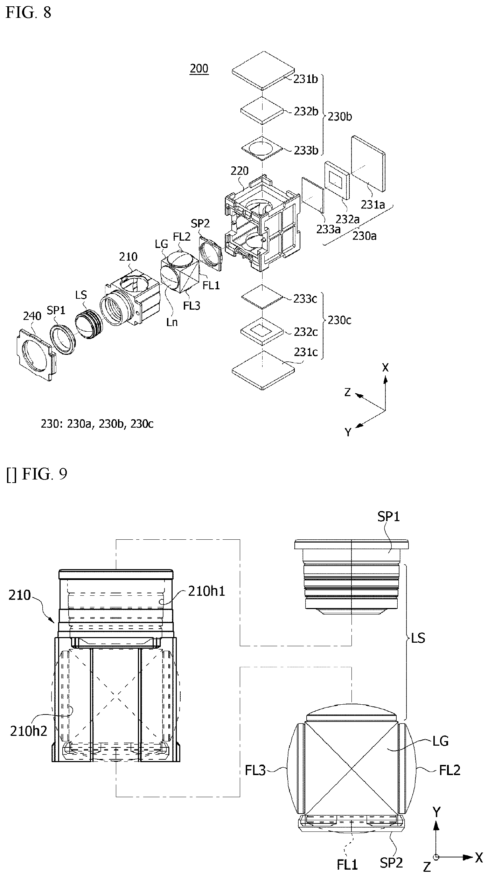

FIG. 7 is a perspective view of a projection device according to one embodiment, and FIG. 8 is an exploded perspective view of the projection device according to one embodiment.

Referring to FIGS. 7 and 8, a projection device 200 according to one embodiment may include an outer lens LS, a barrel 210, a housing 220, a light source unit 230, a light guide LG, a lens FL, and an additional housing 240. Additionally, the projection device 200 may include a first spacer SP1 and a second spacer SP2.

First, the outer lens LS may be inserted into the barrel 210. That is, the barrel 210 is located inside the projection device 200 and may accommodate the outer lens LS. Additionally, the barrel 210 may accommodate the light guide LG, the lens LF, the first spacer PS1, and the second spacer SP2.

The barrel 210 may have a space for accommodating the components described above or additional optical elements. For example, the barrel 210 may include a first groove and a second groove, which will be described below. The outer lens LS may be disposed in the first groove. The light guide LG may be disposed in the second groove. Additionally, the first groove and the second groove may be spaced apart from each other in the barrel 210. That is, the barrel 210 has spaces (e.g., grooves) in which the outer lens LS and the light guide LG are disposed, and these spaces may be separated or spaced apart from each other. Accordingly, insertion or coupling of the outer lens and the light guide may be facilitated.

In contrast, when the above spaces are connected to each other, miniaturization of the projection device may be achieved.

The outer lens LS may be accommodated in the barrel 210, and the first spacer SP1 may be located on the outside of the outer lens LS. The first spacer SP1 may be disposed on the outside of the outer lens LS accommodated in the first groove of the barrel 210 to prevent separation of the outer lens LS.

The barrel 210 may include a plurality of holes connected to the second groove. A plurality of holes may be located on a side surface of the barrel 210. Accordingly, light emitted from the light source unit 230 which will be described below may be incident on the light guide LG. Furthermore, the light that is incident on the light guide LG may be reflected and passed through or transmitted through the outer lens LS to be provided to the waveguide described above. For this purpose, the first groove and the second groove may be connected to each other through a through hole. That is, the light reflected from the light guide LG in the second groove may be provided to the outer lens LS of the first groove through the through hole. Additionally, as described above, the light from the light source unit 230 may be emitted to the inner light guide LG through the plurality of holes disposed on the side surface of the barrel 210.

The light guide LG may be located in the barrel 210. The light guide LG may be connected to the lens FL which will be described below.

The light guide LG may include at least one prism. For example, the light guide LG may be formed by coupling or joining a plurality of prisms. The light guide LG may include a prism. The prism is a reflective member, which may include, for example, an x-prism. As an example, the light guide LG may have a structure in which at least two prisms are coupled. Additionally, the light guide LG may be a non-polarizing prism. That is, the light guide LG may not perform polarization on the light emitted from light sources 232a, 232b, and 232c.

The light guide LG may include at least two coated surfaces (reflective members or reflective sheets). One of the at least two coated surfaces may reflect light having a first wavelength and light having a second wavelength and transmit light having a third wavelength. That is, the coated surface may reflect light in a certain wavelength band. Accordingly, for light emitted from a plurality of light sources 232a, 232b, and 232c, light in a desired wavelength band may be reflected from the light guide LG. For example, light passing through the light guide LG may be provided to the outer lens LS.

The lens FL may be connected to the light guide LG. The lens FL may be disposed adjacent to the light guide LG. For example, the lens FL may be in contact with the light guide. That is, the lens FL may be in contact with the light guide LG. Additionally, the light guide LG may be in contact with the lens FL.

The lens FL may be coupled with the light guide LG. In this case, the lens FL may be coupled to the light guide LG through a bonding member or a coupling member. The bonding member or coupling member may be located between the lens FL and the light guide LG.

The lens FL is located on the outer surface of the light guide LG, and there may be at least one lens FL. For example, the number of lenses FL may correspond to the number of light sources of the light source unit 230 which will be described below. When the number of light sources is three, the number of lenses FL may also be three.

For example, the lens FL may include a first lens, a second lens, and a third lens corresponding to the light sources. The first lens may correspond to a first light source unit. The second lens may correspond to a second light source unit. The third lens may correspond to a third light source unit. That is, the first to third lenses may respectively receive light emitted from the first to third light source units.

The second spacer SP2 may be located in the barrel 210. For example, the second spacer SP2 may be larger than the light guide LG or the lens FL. The second spacer SP2 may be disposed on the outside of the light guide LG and the lens FL. Accordingly, the light guide LG and the lens FL may not be separated from the barrel 210. In other words, the second spacer SP2 can prevent the light guide LG and the lens FL from being separated from the barrel 210.

The housing 220 may be located outside the barrel 210. The housing 220 may surround the barrel 210. For example, the housing 220 may be disposed to surround at least a portion of the barrel 210. Further, the housing 220 may include a space for accommodating a light source. Additionally, the housing 220 may include at least one housing hole. The light source may be disposed in the housing hole. Additionally, the light emitted from the light source may be provided to the lens FL and the light guide LG through at least one housing hole. The housing 220 may be disposed outside the barrel 210 and include a space for accommodating the barrel 210 and the light source unit 230.

The light source unit 230 may be provided as one or more light source units. Like the above description, the following description is based on three light source units. The light source unit 230 may include a first light source unit 230a, a second light source unit 230b, and a third light source unit 230c.

The first light source unit 230a may overlap the outer lens LS in a second direction (a Y-axis direction). The second direction (the Y-axis direction) may correspond to a direction of the light emitted from the projection device 200. That is, the second direction (the Y-axis direction) may correspond to a direction in which the light emitted from the light source device 230 is reflected from the light guide LG and emitted to the display unit described above.

The second light source unit 230b and the third light source unit 230c may be positioned to face each other. Alternatively, the second light source unit 230b and the third light source unit 230c may be positioned opposite to each other.

The second light source unit 230b and the third light source unit 230c may overlap in a first direction (an X-axis direction). The first direction (the X-axis direction) may be perpendicular to the second direction (the Y-axis direction). A third direction (a Z-axis direction) may be a direction perpendicular to the first and second directions.

The first light source unit 230a may be located in an area between the second light source unit 230b and the third light source unit 230c. The directions of light emitted from the second light source unit 230b and light emitted from the third light source unit 230c may be opposite to each other.

The light source units may include substrates 231a, 231b, and 231c, light sources 232a, 232b, and 232c, and optical elements 233a, 233b, and 233c.

Furthermore, the substrates 231a, 231b, and 231c, the light sources 232a, 232b, and 232c, and the optical elements 233a, 233b, and 233c may be sequentially located inside the housing 220. That is, the optical element may be located closer to the light guide LG than the substrate and the light source.

The substrates 231a, 231b, and 231c may be connected to the light sources 232a, 232b, and 232c and transmit electrical energy such that the light sources 232a, 232b, and 232c emit light.

The substrate 231a, 231b, and 231c may be located on the outermost side of the housing 220.

The substrates 231a, 231b, and 231c may include a first substrate 231a, a second substrate 231b, and a third substrate 231c. The first substrate 231a may overlap the light guide LG in the second direction (the Y-axis direction). The second substrate 231b and the third substrate 231c may overlap in the first direction (the X-axis direction). The second substrate 231b and the third substrate 231c may be positioned to face each other in the housing 220. The first substrate 231a may be located in an area between the second substrate 231b and the third substrate 231c.

The light sources 232a, 232b, and 232c may emit light. For example, the light emitted from the light sources 232a, 232b, and 232c may be incident on the light guide LG in the housing 220. The light guide LG may be located in the housing 220.

There may be one or more light sources 232a, 232b, and 232c. The light sources 232a, 232b, and 232c may include a first light source 232a, a second light source 232b, and a third light source 232c. The light sources 232a, 232b, and 232c may be disposed on the substrates.

That is, the light sources 232a, 232b, and 232c of the light source device 230 may be provided as a single light source or a plurality of light sources. For example, the plurality of light sources 232a, 232b, and 232c may include the first light source 232a, the second light source 232b, and the third light source 232c. The first light source 232a to the third light source 232c may emit light in the same direction or in different directions. For example, the second light source 232b and the third light source 232c may be positioned to face each other. The second light source 232b and the third light source 232c may be positioned to overlap in the first direction (the X-axis direction). The light guide LG may be located between the second light source 232b and the third light source 232c. Accordingly, the light guide LG may overlap the second light source 232b and the third light source 232c.

The first light source 232a to the third light source 232c may emit light toward the light guide LG. The first light source 232a may overlap the light guide LG in the second direction. By this configuration, the projection device 200 may have a compact light source device 230.

Additionally, the first light source 232a, the second light source 232b, and the third light source 232c may emit light partially having the same wavelength or color, or different wavelengths or colors. For example, the first light source 232a, the second light source 232b, and the third light source 232c may emit red light, green light, and blue light, respectively.

The number of the optical elements 233a, 233b, and 233c may be one or more. The optical elements 233a, 233b, and 233c may include a first optical element 233a, a second optical element 233b, and a third optical element 233c corresponding to the first light source 232a, the second light source 232b, and the third light source 232c, respectively. The first optical element 233a, the second optical element 233b, and the third optical element 233c may include filters. Additionally, the first optical element 233a, the second optical element 233b, and the third optical element 233c may contain glass. The first optical element 233a, the second optical element 233b, and the third optical element 233c may filter light. Alternatively, the first optical element 233a, the second optical element 233b, and the third optical element 233c may early block foreign matter from entering the light source. That is, the light source may be protected.

The additional housing 240 may be disposed on the outside of the barrel 210 and surround the barrel 210. The barrel 210 may be coupled with the housing 220 through various coupling methods, and the additional housing 240 may be coupled with the housing 220. The additional housing 240 may also be coupled with the barrel 210. Accordingly, the projection device 200 according to the embodiment may provide improved reliability.

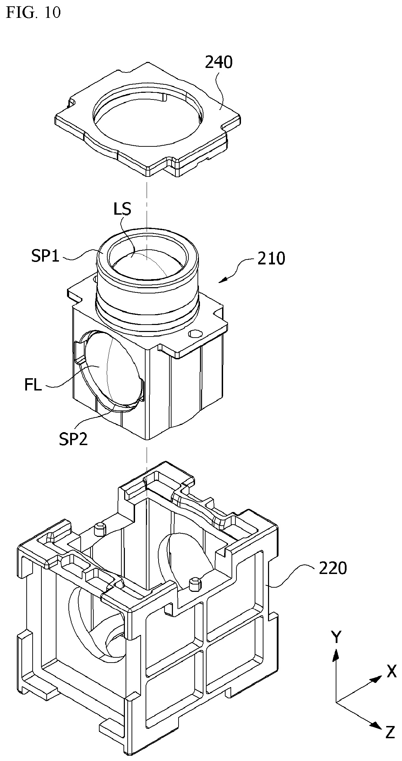

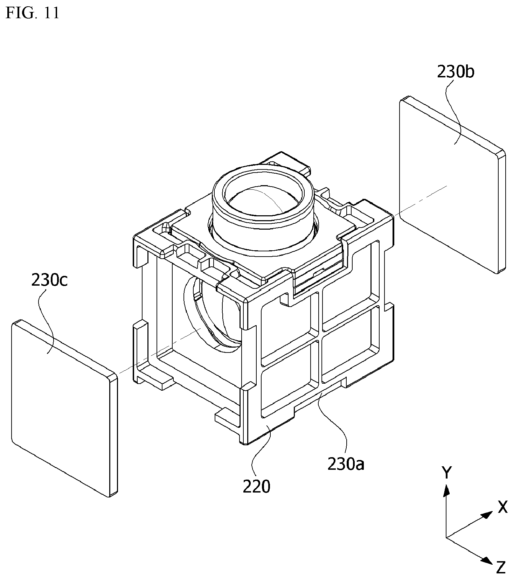

FIG. 9 is a view describing the coupling of the outer lens, the first spacer, the light guide, the lens, and the second spacer with the barrel in the projection device according to one embodiment, FIG. 10 is a view describing the coupling between the barrel, the housing, and the additional housing in the projection device according to one embodiment, and FIG. 11 is a view describing the coupling between the housing and the light source unit in the projection device according to one embodiment.

Referring to FIGS. 9 to 11, in the projection device according to the embodiment, the barrel 210 may include a first groove 210h1 and a second groove 210h2 as described above. The first groove 210h1 and the second groove 210h2 may overlap in the second direction (the Y-axis direction). Furthermore, the second groove 210h2 and the first groove 210h1 may be sequentially disposed in the second direction (the Y-axis direction).

The outer lens may be disposed in the first groove 210h1. The light guide may be disposed in the second groove 210h2.

The first groove 210h1 and the second groove 210h2 may be spaced apart from each other in the second direction (the Y-axis direction). Additionally, the first groove 210h1 and the second groove 210h2 may be connected to each other through the through hole as described above. Accordingly, the light reflected from the light guide in the second groove 210h2 may be provided to the outer lens in the first groove 210h1 and ultimately emitted to the display unit.

The outer lens LS may be inserted into the first groove 210h1 of the barrel 210. The first spacer SP1 may be located on the outside of the outer lens LS in the first groove 210h1 in the barrel 210. The first spacer SP1 may be in contact with the outer lens LS to prevent separation of the outer lens LS as described above.

The light guide LG and the lenses FL1, FL2, and FL3 connected to the light guide LG may be inserted into the second groove 210h2. The light guide LG and the lenses FL1, FL2, and FL3 connected to the light guide LG may be located in the second groove 210h2. The second spacer SP2 may be located on the outside of the light guide LG and the lenses FL1, FL2, and FL3 connected to the light guide LG. The second spacer SP2 may be in contact with the light guide LG or the lens (in particular, a first guide lens FL1). Accordingly, separation of the light guide LG and the lenses FL1, FL2, and FL3 connected to the light guide LG can be prevented.

The first spacer SP1 and the second spacer SP2 may be sequentially disposed in the second direction (the Y-axis direction). The first spacer SP1 and the second spacer SP2 may overlap in the second direction (the Y-axis direction). The outer lens LS, the light guide LG, and the first guide lens FL1 may be located between the first spacer SP1 and the second spacer SP2. Accordingly, the first spacer SP1 and the second spacer SP2 may overlap the outer lens LS, the light guide LG, and the first guide lens FL1 in the second direction (the Y-axis direction).

The barrel 210 may be inserted into the housing 220. That is, the barrel 210 may be located in a receiving hole of the housing 220. Furthermore, the housing 220 and the barrel 210 may be coupled through various coupling methods. For example, a protrusion of the housing 220 and a coupling hole of the barrel 210 may be coupled with each other. Further, the housing 220 may be located at the bottom of the barrel 210, and the additional housing 240 may be located at the top of the barrel 210. Improved coupling strength between the barrel 210 and the housing 220 may be maintained through the additional housing 240.

After the barrel 210 is accommodated in the housing 220, a plurality of light source units may be inserted into a side surface of the housing 220. For example, the first light source unit 230a, the second light source unit 230b, and the third light source unit 230c may be located on the side surface of the housing 220.

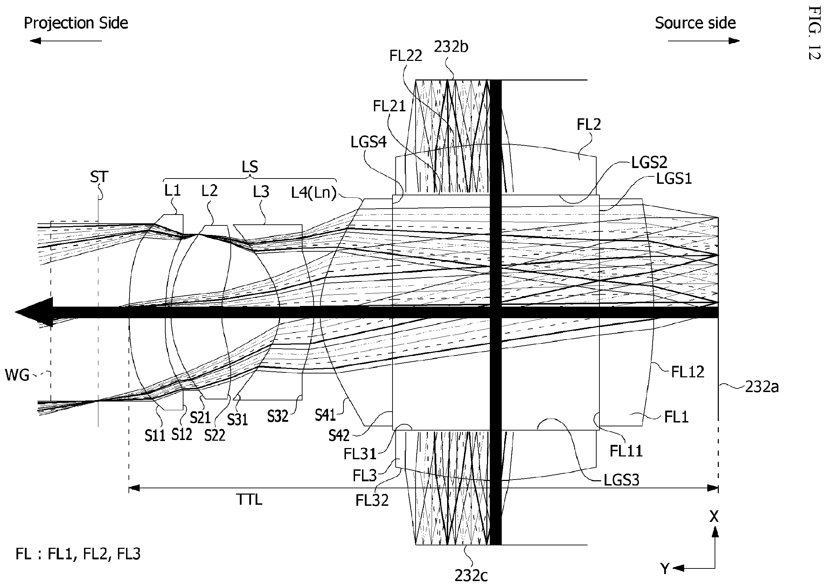

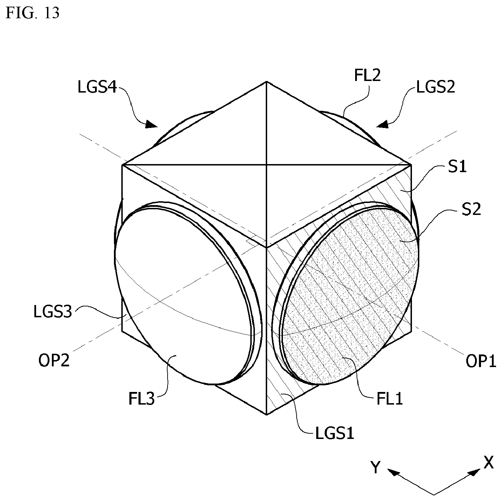

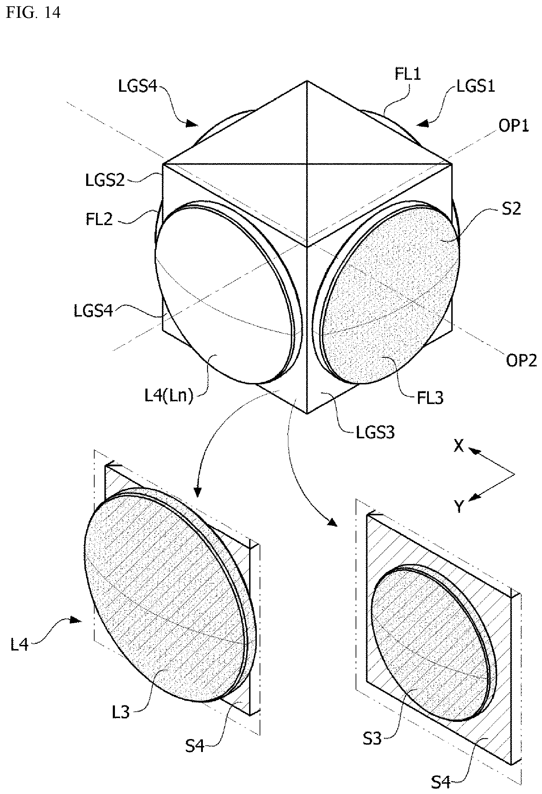

FIG. 12 is a view of an optical system of the projection device according to the first embodiment, FIG. 13 is a perspective view of the light guide, a fourth lens, and a side lens in the projection device according to the embodiment, and FIG. 14 is another perspective view of the light guide, the fourth lens, and the side lens in the projection device according to the embodiment.

Referring to FIGS. 12 to 14, in the projection device according to the first embodiment, the optical system may include the outer lens LS, the light guide LG, the optical element (not shown), and the lens FL. Furthermore, in the projection device, the optical system may further include the light sources 232a, 232b, and 232c. Additionally, in the projection device, the optical system may include an aperture ST. The outer lens LS may be used interchangeably with a "lens group" and "at least one lens." In the projection device, a direction from the light guide LG toward the lens group LS, the aperture ST, or the light guide WG may be referred to as an object direction (an object side), a projection direction (or a projection side), or a target direction (or a target side). Accordingly, the target side may correspond to a direction from each light source toward the waveguide WG based on a light travel path. The direction from the light guide LG toward each light source may be referred to as a light source direction (a source side), an image direction (or an image side), or a light source side. That is, the light source side may be in the direction from the light guide LG toward the light source. In the drawing, the light source side is a direction toward the first light source, but the light source side may correspond to a direction from first to third side lenses and the first to third optical elements toward the light source adjacent to these components. For example, the light source side with respect to the second side lens or the second optical element corresponds to a direction toward the second light source 232b.

Specifically, the lens group LS may include N lenses. The N lenses may include a first lens L1, a second lens L2, a third lens L3, and a fourth lens L4 in the order of being adjacent to the waveguide WG.

The light guide LG may have a hexahedral shape. Accordingly, the light guide LG may include a first side surface or first side LGS1 facing the first light source 232a. The light guide LG may include a second side surface or second side LGS2 facing the second light source 232b. The light guide LG may include a third side surface or third side LGS3 facing the third light source 232c. The light guide LG may include a fourth side surface or fourth side LGS4 facing the fourth lens L4 or an N^{th} lens Ln. Additionally, the first to fourth sides may refer to directions in addition to the side surfaces. For example, the first light source 232a may be located on the first side of the light guide LG.

Further, the lenses FL1 to FL3 may include a first side lens FL1, a second side lens FL2, and a third side lens FL3. The above-described first guide lens may correspond to the first side lens FL1. Furthermore, the first side lens may be used interchangeably with a "lens," a "guide lens," etc.

The first side LGS1 and the fourth side LGS4 of the light guide LG may be opposite to or face each other. The second side LGS2 and the third side LGS3 of the light guide LG2 may be opposite to or face each other.

In the light guide LG, a first optical axis OP1 for the first side LGS1 and the fourth side LGS4 may be orthogonal to a second optical axis OP2 for the second side LG2 and the third side LG3. The first optical axis OP1 may correspond to the axis of light emitted from the first light source 232a and may be parallel to the second direction (the Y-axis direction). The second optical axis OP1 may be parallel to the first direction (the X-axis direction). According to this configuration, since the optical axes are orthogonal to each other, a mounting structure of the first light source 232a to the third light source 232c in the projection device according to the embodiment can be miniaturized, and the process can be minimized.

The lens group LS may include three or four lenses. As shown in FIG. 17, the outer lens LS may include three lenses, and the three lenses may include the first lens L1 to the third lens L3. In this case, the N^{th} lens corresponds to the third lens L3. However, as shown in the drawing, the outer lens or lens group LS may include four lenses, and the four lenses may include the first lens L1 to the fourth lens L4. In this case, the N^{th} lens Ln corresponds to the fourth lens L4.

The first lens L1 may be disposed farthest from the fourth side LGS4 of the light guide LG, and the N^{th} lens or fourth lens L4 or Ln may be disposed closest to the fourth side LGS4 of the light guide LG.

The first side LGS1 and the fourth side LGS4 of the light guide LG may overlap in an optical axis direction or the second direction.

As an embodiment, the N^{th} lens or the fourth lens L4 may be coupled with the light guide LG. In particular, the fourth lens L4 may be in contact with the fourth side surface or fourth side LGS4 of the light guide LG.

The lens FL may be disposed on the light guide LG. For example, the lens FL may be in contact with the light guide LG. The number of lenses FL may correspond to the number of light sources. For example, the number of lenses FL may be three when the number of light sources is three. Additionally, the number of lenses FL may be one when the number of light sources is one.

The lens FL may hereinafter be referred to as a "light source lens" or a "side lens." The lens FL may include the first side lens FL1, the second side lens FL2, and the third side lens FL3. The first side lens FL1 may be located in an area between the second side lens FL2 and the third side lens FL3. However, the first side lens FL1 may not overlap the second side lens FL2 and the third side lens FL3 in the second direction (the Y-axis direction). The first side lens FL1 may be disposed to be misaligned with the second side lens FL2 and the third side lens FL3 in the first direction (the X-axis direction). Furthermore, the first side lens FL1 may overlap the light guide LG in the second direction (the Y-axis direction). For example, the first side lens FL1 may overlap the light guide LG in a light emission direction of the first light source 232a.

Additionally, the optical element may be disposed between the light source and the light guide LG. The optical element may include the first optical element, the second optical element, and the third optical element. The light source may include the first light source 232a, the second light source 232b, and the third light source 232c.

The first optical element may be disposed between the first light source 232a and the first side lens FL1. The second optical element may be disposed between the second light source 232b and the second side lens FL2. The third optical element may be disposed between the second light source 232c and the third side lens FL3.

The first optical element may be disposed between the second optical element and the third optical element. The first optical element may not overlap the second optical element and the third optical element in the second direction (the Y-axis direction). The first optical element may be disposed to be misaligned with the second optical element and the third optical element in the second direction.

Accordingly, the light emitted from the first light source 232a may be provided to the waveguide WG through the first optical element, the first side lens FL1, the light guide LG, and the outer lens LS. The light emitted from the second light source 232b may be provided to the waveguide WG through the second optical element, the second side lens FL2, the light guide LG, and the outer lens LS. The light emitted from the third light source 232c may be provided to the waveguide WG through the third optical element, the third side lens FL3, the light guide LG, and the outer lens LS.

The first lens L1 may include a first surface S11 or a first target surface S11 which is a surface to face the waveguide WG (or a target or an object). Additionally, the first lens L1 may include a second surface S12 or a second target surface S22 which is a surface to face the light guide LG (or a light, a light source, or an image). The second lens L2 may include a third surface S31 or a third target surface S21 which is a surface to face the waveguide WG. The second lens L2 may include a fourth surface S22 or a fourth target surface S22 which is a surface to face the light guide LG. The third lens L3 may include a fifth surface S31 or a fifth target surface S31 which is a surface to face the waveguide WG. The third lens L3 may include a sixth surface S32 or a sixth target surface S32 which is a surface to face the light guide LG. The fourth lens L4 may include a seventh surface S41 or a fourth target surface S41 which is a surface to face the waveguide WG. The fourth lens L4 may include an eighth surface S42 or an eighth target surface S42 which is a surface to face the light guide LG. The fourth surface S42 may be in contact with the fourth side LGS4 of the light guide LG. In this way, total reflection can be prevented from occurring on the sides (the first to fourth sides) of the light guide. For example, total reflection may be suppressed on the fourth side surface LGS4 of the light guide LG, and thus stray light may be eliminated.

Additionally, light emitted from the plurality of light sources may be reflected from the light guide and propagated toward the aperture ST or waveguide WG after passing through the outer lens LS. In the drawing, it is shown that light emitted from the first light source 232a passes through the light guide LG and is provided to the waveguide. However, as described above, it should be understood that light emitted from other light sources (the second and third light sources) is also reflected from the light guide LG and propagated toward the waveguide or the like.

Below, various embodiments of the present invention will be described based on the above-described contents. Furthermore, the contents which will be described below may be applied equally, except for any content that contradicts the contents described in other implementations.

In the optical system of the projection device according to the first embodiment, the first light source 232a may be disposed on the first side or the image side of the light guide LG. The lens group LS may be disposed on the fourth side or object side (or a projection side or target side) of the light guide LG. Additionally, the first side lens FL1 may be located between the first side LGS1 of the light guide LG and the first light source 232a. As an embodiment, the first side LGS1 of the light guide LG may overlap the fourth side LGS4 of the light guide LG in the optical axis direction or the second direction (the Y-axis direction) of the outer lens LS. In other words, the first side LGS1 and the fourth side LGS4 of the light guide LG may overlap and face each other in the second direction.

In the present embodiment, the first side lens FL1 may be in contact with the light guide LG. For example, the first side lens FL1 may be bonded to the first side LGS1 of the light guide LG by a bonding member or the like, or may be formed integrally with the first side LGS1.

As described above, the lens group LS may include the first lens L1 to the N^{th} lens Ln. As an embodiment, in the lens group LS, the first lens L1 may be disposed farthest from the fourth side LGS4 of the light guide LG. The fourth lens L4 may be disposed closest to the fourth side LGS4 of the light guide LG. In other words, a length between the fourth side LGS4 and the first lens L1 in the second direction (the Y-axis direction) may be greater than a length d4 between the fourth side LGS4 and the fourth lens L4 in the second direction (Y-axis direction). In this case, since the fourth lens L4 is in contact with the fourth side LGS4, the length d4 may be 0.

Furthermore, the third lens L3 and the second lens L2 may be disposed between the first lens L1 and the fourth lens L4 in the second direction.

As an embodiment, in the first lens L1, a surface opposite to the surface facing the fourth side LGS4 of the light guide LG may be convex. That is, the first lens L1 may be convex in the second direction (the Y-axis direction). Conversely, the first lens L1 may be concave in a direction opposite to the second direction. In other words, the first surface S11 of the first lens L1 may be concave toward the fourth side LGS4. The first lens L1 may be convex toward the waveguide WG. Accordingly, light collected from the light guide LG may be easily guided to the light guide plate or waveguide WG. In other words, the collected light may be efficiently diffused.

As an embodiment, the second side lens FL2 may be located between the second side LGS2 of the light guide LG and the second light source 232b. Additionally, the third side lens FL3 may be located between the third side LGS3 of the light guide LG and the third light source 232c.

The first side lens FL1 may include a surface FL12 adjacent to the first light source 232a or an image side surface. The image side surface FL12 of the first side lens FL1 may be convex toward the first light source 232a or the image side.

The second side lens FL2 may include a surface FL22 adjacent to the second light source 232b or an image side surface. The image side surface FL22 of the second side lens FL2 may be convex toward the second light source 232b or the image side.

The third side lens FL3 may include a surface FL32 adjacent to the third light source 232c or an image side surface. The image side surface FL32 of the third side lens FL3 may be convex toward the third light source 232c or the image side.

In other words, the surface FL12 adjacent to the first light source of the first side lens FL1 may be convex toward the first light source 232a. The surface FL22 adjacent to the second light source of the second side lens FL2 may be convex toward the second light source 232b. The surface FL32 adjacent to the third light source of the third side lens FL3 may be convex toward the third light source 232c.

In the first side lens FL1, the second side lens FL2, and the third side lens FL3, the surfaces FL12, FL22, and FL32 adjacent to the light sources 232a, 232b, and 232c may have the same radius of curvature. The radius of curvature of each of the above surfaces FL12, FL22, FL32 may have a negative (-) value.

By this configuration, a total track length (TTL) can be minimized, and manufacturing yield can be easily secured. The TTL may correspond to a distance on the optical axis from the first surface S11 of the first lens L1 to the light source 232a, 232b, or 232c. Alternatively, the TTL may correspond to a distance along the optical axis from the first surface S11 of the first lens L1 to the light source. For example, the TTL may correspond to a distance on the optical axis from the first lens L1 to the first light source 232a. The distance on the optical axis from the first lens L1 to the first light source 232a or the TTL may be less than or equal to twice a focal length of the optical system including the lens group Ls, the light guide LG, and the side lens FL1, FL2, or FL3. By this configuration, the size of the projection device or optical system can be easily reduced.

According to an embodiment, the focal length of the optical system (or the lens group Ls, the light guide LG, and the side lens FL1, FL2, or FL3) may be in the range of 4 mm to 10 mm. The maximum distance from the first lens L1 to the first light source 232a or the TTL may be in the range of 8 mm to 20 mm.

Additionally, in the first lens L1, a surface facing the light guide LG or the second surface S12 may be convex in a direction opposite to the direction toward the light guide LG. That is, the second surface S12 may be convex toward the object side, the target side, or the projection side. By this configuration, the TTL can be minimized, and the brightness of light provided to the waveguide WG can be easily secured.

Additionally, the size of the light guide LG may be greater than the size of the light source. For example, the area S1 of each side of the light guide LG may be greater than the area of each of the light sources 232a to 232c. For example, the area of each surface of the light guide LG facing each of the light sources 232a to 232c is greater than the area of each of the light sources 232a to 232c facing the light guide LG. For example, the area of the first side surface LGS1 of the light guide LG is greater than the area of the first light source 232a. The area of the second side surface LGS2 of the light guide is greater than the area of the second light source 232b. The area of the third side surface LGS3 of the light guide is greater than the area of the third light source 232c. For example, the minimum length of the light guide LG in one direction may be greater than the minimum length of the light source in one direction. For example, the minimum length of the first side surface LGS1 of the light guide in one direction is greater than the minimum length of the first light source 232a in one direction. The minimum length of the second side surface LGS2 of the light guide in one direction is greater than the minimum length of the second light source 232b in one direction. The minimum length of the third side surface LGS3 of the light guide in one direction is greater than the minimum length of the third light source 232c in one direction. Accordingly, the efficiency of the light source may be improved, and flare occurrence can be prevented.

The size or area S1 of each side of the light guide LG may be greater than the size S2 of each side lens that is in contact with each side. For example, the size S2 of the first side lens FL1 may be smaller than the size S1 of the first side LGS1 of the light guide. For example, the size or effective diameter of the surface FL11 of the first side lens FL1 adjacent to the light guide is smaller than the size of the first side surface LGS1 of the light guide. The size or effective diameter of the surface FL21 of the second side lens FL2 adjacent to the light guide is smaller than the size of the second side surface LGS2 of the light guide. The size or effective diameter of the surface FL31 of the third side lens FL3 adjacent to the light guide is smaller than the size of the third side surface LGS3 of the light guide. For example, the minimum length of the light guide LG in one direction is greater than the minimum length of each of the first to third side lenses in one direction. For example, the minimum length of the first side surface LGS1 of the light guide in one direction is greater than the minimum length or diameter length of the surface FL11 of the first side lens FL1 adjacent to the light guide in one direction. The minimum length of the second side surface LGS2 of the light guide in one direction is greater than the minimum length or diameter length of the surface FL12 of the second side lens FL2 adjacent to the light guide in one direction. The minimum length of the third side surface LGS3 of the light guide in one direction is greater than the minimum length or diameter length of the surface FL13 of the third side lens FL3 adjacent to the light guide in one direction. By this configuration, interference between the side lens FL and the light guide LG can be eliminated, and the ease of manufacturing the side lens can be secured.

Additionally, the size or effective diameter of the light guide LG may be greater than the size or effective diameter of at least one lens among the first lens to the N^{th} lens (the Ln or fourth lens) of the lens group Ls. By this configuration, TTL reduction can be secured, and miniaturization of the projection device can be achieved.

Additionally, the size S4 of the N^{th} lens or fourth lens L4 may be different from the size S3 of the fourth side LGS4 of the light guide LG. For example, the size S4 of the N^{th} lens or fourth lens L4 may be smaller than the size S3 of the fourth side LGS4 of the light guide LG. Accordingly, the miniaturization described above may be achieved.

As a modified example, the size S4 of the N^{th} lens or fourth lens L4 may be smaller than the size S3 of the fourth side LGS4 of the light guide LG. Alternatively, some area of the fourth lens L4 may be misaligned with the fourth side LGS4 of the light guide LG in the second direction (the Y-axis direction).

Furthermore, an object side surface F11 of the first side lens FL1 may be in contact with the first side LGS1 of the light guide LG. An object side surface F21 of the second side lens FL2 may be in contact with the second side LGS2 of the light guide LG. An object side surface F31 of the third side lens FL3 may be in contact with the third side LGS3 of the light guide LG. Additionally, the image side surface or eighth surface S42 of the N^{th} lens or fourth lens L4 may be in contact with the fourth side LGS4 of the light guide LG.

The seventh surface S43 of the fourth lens L4 may be concave toward the light guide LG or convex toward the object side.

The fifth surface S31 may be concave in the second direction. Alternatively, the fifth surface S31 may be convex toward the light guide LG. The sixth surface S32 may be concave in the second direction or toward the waveguide. The sixth surface S32 may be concave (or convex) in the second direction or toward the waveguide. Alternatively, the sixth surface S32 may be convex (or concave) toward the light guide LG.

The third surface S21 may be convex in the second direction or toward the waveguide. Alternatively, the third surface S3 may be concave toward the light guide LG. The fourth surface S22 may be convex (or concave) in the second direction or toward the waveguide. Alternatively, the fourth surface S22 may be convex (or concave) toward the light guide LG.

The first surface S11 may be convex toward the waveguide or the first direction as described above. Alternatively, the second surface S12 may be concave (or convex) toward the light guide LG. The second surface S12 may be concave in the first direction or toward the waveguide.

Further, in an embodiment, the refractive power or the power of the first lens L1 may be positive. The combined power of the lenses disposed between the first lens L1 and the N^{th} lens Ln may be positive or negative. That is, the combined power of the second lens L2 and the third lens L3 may be positive or negative.

The second lens L2 may have positive refractive power. The third lens may have negative refractive power. The fourth lens may have positive or negative refractive power. The side lenses FL1 to FL3 may have positive refractive power.

The second side LGS2 of the light guide LG may be disposed to face the third side LGS3 of the light guide LG with the light guide LG interposed therebetween. Accordingly, the second side lens FL2 and the third side lens FL3 may be disposed to face each other or to be symmetrical with respect to the light guide LG.

As described above, each side lens may be in contact with the light guide LG. For example, the first side lens FL1 may be in contact with or abut on the light guide LG. The second side lens FL2 may be in contact with or abut on the light guide LG. Additionally, the third side lens FL3 may be in contact with or abut on the light guide LG.

Each side lens may have a radius of curvature of 100 mm or more with respect to the optical axis of the surface or the contact surface FL11, FL21, or FL31 adjacent to the light guide LG. The optical axis may correspond to the central axis of light emitted to the light guide from each light source.

Additionally, the radius of curvature of the seventh surface S41 of the N^{th} lens or the fourth lens L4 may have a positive or negative value. For example, the seventh surface S41 may be convex or concave in the second direction or toward the object side as described above.

By this configuration, the field of view (FOV) of light provided from the projection device or optical system may be maintained at a narrow angle of 45 degrees or less.

Additionally, as described above, each side lens may be coupled with the light guide LG by a contact member or a bonding member. The bonding member may be made of a transparent material and have a refractive index similar to that of the light guide LG or the side lens. That is, the bonding member may be located between the light guide LG and one of the first side lens FL1 to the third side lens FL3. Additionally, the bonding member may be located between the light guide LG and the fourth lens L4.

As described above, the size or length of the side surface of the light guide LG may be greater than or equal to that of a surface of each side lens adjacent to the light guide LG. In this case, even when the size of the side surface of the light guide LG is different from that of the bonding surface FL11, FL21, or FL31 of each side lens with the light guide, the length of the side surface of the light guide LG in one direction (the first direction, the second direction, or the third direction) is greater than that of the bonding surface FL11, FL21, or FL31 of each side lens with the light guide. For example, the length of the side surface of the light guide LG in one direction (the first direction, the second direction, or the third direction) is greater than that of the side lens (each of the first side lens to the third side lens) in one direction (the first direction, the second direction, or the third direction). For example, the lengths of the side surfaces of the light guide LG in two directions may be greater than those of the bonding surfaces of the side lenses in two directions. Additionally, the length of the side surface of the light guide LG in one direction is greater than that of the bonding surface of the lens in one direction.

As a modified example, the length of the side surface of the light guide LG in one direction (the first direction, the second direction, or the third direction) may be smaller than that of the side lens (each of the first side lens to the third side lens) in one direction (the first direction, the second direction, or the third direction). For example, the lengths of the side surfaces of the light guide LG in two directions may be greater than those of the bonding surfaces of the side lenses in two directions, and the length of the side surface of the light guide LG in the remaining one direction may be smaller than that of the bonding surface of the lens in one direction.

Additionally, as an embodiment, the surfaces of the side lenses adjacent to the light guide LG or the bonding surfaces F11, F21, F31, and S42 of the side lenses may be flat. For example, in the first side lens FL1, the surface adjacent to the light guide LG or the bonding surface F11 may be flat.

Furthermore, a semi-aperture may have a radius of an effective diameter or a radius of a light beam range.

The waveguide WG may be disposed to face the first lens L1 as described above. That is, the waveguide WG may be located adjacent to the first lens L1. The aperture ST may be located in a direction from the first lens L1 toward the waveguide. The aperture ST may be located adjacent to the first lens L1. The aperture ST may be positioned corresponding to a contact point between the projection device and the waveguide WG.

Additionally, as an embodiment, in at least one of the N lenses, a surface (an object side surface) opposite to the surface facing the light guide may be concave toward the light guide LG.

The length of the N lenses in the second direction (the Y-axis direction) may be smaller than that of the light guide LG in the second direction.

Furthermore, the contents of Table 1 below may be applied to the components of the optical system according to the embodiment.

**[Table 1]**

| Component | Aperture | First lens | | Second lens | | Third lens | | Fourth lens | | Light guide | | Side lens (FL) | |
|---|---|---|---|---|---|---|---|---|---|---|---|---|---|
| Refractive power | | 0.08828 | | 0.054445 | | -0.32541 | | 0.287109 | | | | 0.10327 | |
| Aperture / 2(Semi-Aperture) | | 1.5 | 1.3241753 | 1.33 | 1.2737391 | 1.2143492 | 1.3471637 | 1.7295982 | 1.7403159 | 1.7403159 | 1.8026746 | 1.8026746 | 1.8130211 |
| Thickness | 0.5 | 0.6339681 | 0.08 | 0.8463622 | 1.0003189 | 0.5611891 | 0.1 | 1.2275182 | 0 | 3.5 | 0 | 0.918347 | 0.1 |
| Material | | | AIR | | AIR | | AIR | | AIR | | AIR | | AIR |
| Refractive index | | 1.73896 | | 1.567 | | 1.634 | | 1.49604 | | 1.5168 | | 1.900696 | |
| Abbe number | | 50 | | 38 | | 23.9 | | 81.45 | | 64.1673 | | 37.0536 | |
| Y Radius | | 5.3097305 | 13.598484 | 2.0049194 | 2.0959905 | -0.823478 | -1.783912 | 1.7033958 | 1.00E+18 | 1.00E+18 | 1.00E+18 | 1.00E+18 | -8.813344 |
| Conic Constant (K) | | 8.5586703 | 88.586645 | 88.586645 | -5.081941 | -2.384506 | -5.192195 | -4.482877 | | | | | |
| 4th Order Coefficient (A) | | 0.0284324 | 0.0636694 | 0.0636694 | -0.043026 | -0.058303 | 0.0137367 | 0.0114977 | | | | | |
| 6th Order Coefficient (B) | | -0.001245 | -0.016273 | -0.016273 | -0.014701 | 0.0658242 | 0.0244791 | -0.001063 | | | | | |
| 8th Order Coefficient (C) | | -1.09E-03 | 0.0133461 | 0.0133461 | 0.0105558 | -0.02577 | -0.001144 | 1.57E-05 | | | | | |
| 10th Order Coefficient (D) | | 1.16E-03 | -0.002875 | -0.002875 | -0.006507 | 0.0044133 | -0.000803 | -9.61E-08 | | | | | |
| 12th Order Coefficient (E) | | -2.85E-04 | 1.84E-04 | 0.0001838 | 0.0018218 | -0.000408 | 0.0001626 | 2.10E-10 | | | | | |
| 14th Order Coefficient (F) | | 0 | 0 | 0 | -0.000109 | 2.20E-05 | -1.44E-05 | 0 | | | | | |
| 16th Order Coefficient (G) | | 0 | 0 | 0 | -3.36E-05 | -6.98E-07 | 6.87E-07 | 0 | | | | | |
| 18th Order Coefficient (H) | | 0 | 0 | 0 | 5.70E-06 | 1.21E-08 | -1.71E-08 | 0 | | | | | |
| 20th Order Coefficient (J) | | 0 | 0 | 0.00E+00 | -2.55E-07 | -8.69E-11 | 1.74E-10 | 0 | | | | | |

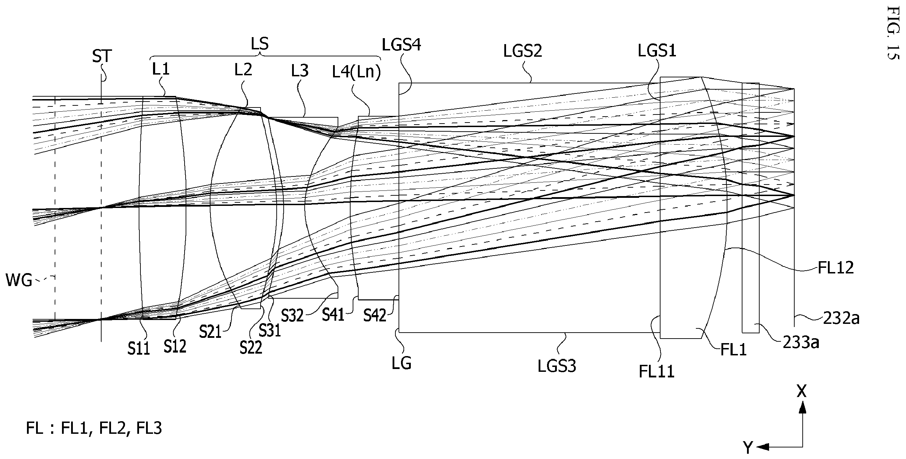

Here, the left column for each lens discloses the content for the side facing the waveguide, and the right column for each lens discloses the content for the side facing the light source. The left column for the side lens discloses the content for the surface F11, F21, or F31 facing the light guide, and the right column for the side lens discloses the content for the surface F12, F22, or F32 facing the light source. The thickness of each lens corresponds to the left column. The spacing between adjacent lenses corresponds to the right column. The right column for the thickness indicates the spacing from the adjacent member in the direction toward the light source. For example, the content for the first surface of the first lens is disclosed in the left column. The content for the second surface of the first lens is disclosed in the right column. Furthermore, the unit for a length, such as a thickness, may be mm. FIG. 15 is a view of an optical system of a projection device according to a second embodiment.

Referring to FIG. 15, the projection device according to the second embodiment may include the optical system as described above. In particular, the optical system in the present embodiment may include an aperture ST, an outer lens LS, a light guide LG, a side lens FL1, an optical element 233a, and a light source 232a as described in the first embodiment. Except for the contents which will be described below, the contents described above may be applied equally.

However, in the present embodiment, there is only one light source, and the optical system may include a first light source 232a. The optical system may include a first optical element 233b and a first side lens FL1. Accordingly, the description of the second optical element, the third optical element, the second side lens, the third side lens, the second light source, and the third light source described above may not be applied to the present embodiment.

In the embodiment, the light source includes only the first light source, and a light source having various colors or wavelength bands may be included. The first light source may include an RGB light source, for example, an RGB LED. Alternatively, the first light source may include a monochromatic light source LED that outputs any one color of RGB. Alternatively, the first light source may include a light source LED that outputs two colors of RGB.

Furthermore, the contents of Table 2 below may be applied to the components of the optical system according to the present embodiment.

**[Table 2]**

| Component | Aperture | First lens | | Second lens | | Third lens | | Fourth lens | | Light guide | | Side lens (FL) | | Optical element (filter₎ | |
|---|---|---|---|---|---|---|---|---|---|---|---|---|---|---|---|
| Refractive power | | 0.13327 | | 0.534032 | | -0.97455 | | 0.215109 | | | | 0.171741 | | | |
| Aperture / 2(Semi-Aperture) | 1.5 | 1.501204 | 1.488433503 | 1.351711889 | 1.280476798 | 122107128 | 1.077920577 | 1.165815793 | 1.226184 | 1.226184 | 1.684562 | 1.684562 | 1.746447 | 1.676367 | |
| Thickness | 0.5 | 0.642066 | 0.315204724 | 0.888997792 | 0.102467841 | 0.28 | 0.59922487 | 0.667915467 | 0 | 3.5 | 0 | 0.904123 | 0.1 | 0.23 | |
| Material | | LAC14_HOYA | AIR | 'E35' | AIR | 'S559' | AIR | 805570.4085 | AIR | BK7_SCHOTT | AIR | TAF1_HOYA | AIR | BK7 SCHOTT | |
| Refractive index | | 1.696802 | | 1.567 | | 1.582 | | 1.80557 | | 1.5168 | | 1.7725 | | 1.5168 | |
| Abbe number | | 55.4597 | | 38 | | 28.3 | | 40.85 | | 64.1673 | | 49.6243 | | 64.1673 | |
| Y Radius | | 28.18044 | -6.41403116 | 2265362245 | -1.74663561 | -1.50905314 | 1.099492201 | 3.780588184 | 1.00E+18 | 1.00E+18 | 1.00E+18 | 1.00E+18 | -4.53329 | 1.00E+18 | |
| Conic Constant (K) | | -20.20659 | -30.83605215 | -7.36918995 | -20.46061284 | -17.83155846 | -0.925236922 | -1991679759 | | | | | | | |
| 4th Order Coefficient (A) | | 0.0017985 | -0.001374397 | 0.093256785 | 0.100664481 | 0.009251529 | -0.211140864 | -0.011650995 | | | | | | | |
| 6th Order Coefficient (B) | | 0.0030104 | 1.84E-06 | 0.057482357 | -0.169628331 | -0.083773403 | 0.217102616 | 0.001553716 | | | | | | | |
| 8th Order Coefficient (C) | | -0.00198 | -1.12E-09 | 0.03852184 | 0.112454614 | 0.1276498 | -0.1127215 | -7.70E-05 | | | | | | | |
| 10th Order Coefficient (D) | | 0.0004769 | 8.77E-13 | 0.027309769 | -0.035823511 | -0.098709216 | 0.031231417 | 1.34E-06 | | | | | | | |
| 12th Order Coefficient (E) | | -5.80E-05 | -7.40E-13 | 0.011206877 | 0.005114474 | 0.051931732 | -0.005052122 | 0 | | | | | | | |
| 14th Order Coefficient (F) | | 4.25E-06 | 6.25E-13 | 0002542175 | -4.41E-05 | -0.017794444 | 0.000492965 | 0 | | | | | | | |
| 16th Order Coefficient (G) | | -1.93E-07 | -2.99E-13 | 0.00032201 | -7.76E-05 | 0.0036133 | -2.86E-05 | 0 | | | | | | | |
| 18th Order Coefficient (H) | | 5.01E-09 | 7.59E-14 | -2.14E-05 | 8.75E-06 | -0.000388397 | 907E-07 | 0 | | | | | | | |
| 20th Order Coefficient (J) | | -5.62E-11 | -795E-15 | 5.86E-07 | -3.05E-07 | 1.69E-05 | -1.21E-08 | 0 | | | | | | | |

Here, the left column for each lens discloses the content for the side facing the waveguide, and the right column for each lens discloses the content for the side facing the light source. The left column for the side lens discloses the content for the surface F11, F21, or F31 facing the light guide, and the right column for the side lens discloses the content for the surface F12, F22, or F32 facing the light source. The thickness of each lens corresponds to the left column. The spacing between adjacent lenses corresponds to the right column. For example, the content for the first surface of the first lens is disclosed in the left column. The content for the second surface of the first lens is disclosed in the right column. Furthermore, the left column for the light guide (the side lens or the optical element) discloses the content for the side facing the waveguide. The right column for the light guide (the side lens or the optical element) discloses the content for the side facing each light source (for example, a second light source for a second side lens). Furthermore, with respect to the thickness of the light guide (the side lens or the optical element), the left column represents the thickness of the component (the length in the first direction or along the optical axis), and the right column represents the separation distance between the component and the closest component toward the light source in the first direction. This description may be applied as in the description for Table 1.

## Claims

1. A projection device comprising:
a light guide;
a first light source disposed on a first side of the light guide;
a lens group disposed on a fourth side of the light guide; and
a first side lens disposed between the first side of the light guide and the first light source,
wherein the lens group includes a first lens to an N^{th} lens,
the first lens is disposed farthest from the fourth side of the light guide,
the first side of the light guide overlaps the fourth side of the light guide in an optical axis direction of the lens group, and
the first side lens and the N^{th} lens are in contact with the light guide.

2. The projection device of claim 1, wherein the N^{th} lens in the lens group is disposed closest to the light guide.

3. The projection device of claim 1, further comprising:
a second light source disposed on a second side of the light guide;
a third light source disposed on a third side of the light guide;
a second side lens disposed between the second side of the light guide and the second light source; and
a third side lens disposed between the third side of the light guide and the third light source.

4. The projection device of claim 3, wherein a surface of the first side lens adjacent to the first light source is convex,
a surface of the second side lens adjacent to the second light source is convex,
a surface of the third side lens adjacent to the third light source is convex, and
the surfaces of the first side lens, the second side lens, and the third side lens, which are adjacent to each light source, have the same radius of curvature.

5. The projection device of claim 3, wherein, a first optical axis for the first side and the fourth side of the light guide is orthogonal to a second optical axis for the second side and the third side of the light guide.

6. The projection device of claim 1, wherein a distance on an optical axis from the first lens to the first light source is less than or equal to twice a focal length of the lens group, the light guide, and the first side lens.

7. The projection device of claim 1, wherein, a surface of the first lens facing the light guide is convex in a direction opposite to a direction toward the light guide.

8. The projection device of claim 1, wherein a size of the light guide is greater than a size of the light source.

9. The projection device of claim 1, wherein a size of the first side lens is smaller than a size of the first side of the light guide.

10. The projection device of claim 1, wherein a size or effective diameter of the light guide is greater than a size or effective diameter of at least one lens among the first lens to the N^{th} lens of the lens group.
